Europäisches Patentamt

European Patent Office

Office européen des brevets

(11) Publication number: **0 474 187 A2**

(19)

# EUROPEAN PATENT APPLICATION

(21) Application number: **91114841.9**

(22) Date of filing: **03.09.91**

(51) Int. Cl.5: **G01N 15/14**, G01N 35/06

(30) Priority: **05.09.90 JP 234757/90**

(43) Date of publication of application:
**11.03.92 Bulletin 92/11**

(84) Designated Contracting States:
**DE FR GB**

(71) Applicant: **HITACHI, LTD.**
**6, Kanda Surugadai 4-chome**
**Chiyoda-ku, Tokyo 101(JP)**

(72) Inventor: **Miyake, Ryo**
**Tsukuba Hausu 4-507, 2625-3, Shimoinayoshi**
**Chiyodamura, Niihari-gun, Ibaraki-ken(JP)**
Inventor: **Ohki, Hiroshi**
**8-1, Migimomi**
**Tsuchiura-shi(JP)**
Inventor: **Yamazaki, Isao**
**Niihariryo 3-15-29 , Inayoshi**
**Chiyodamura, Niihari-gun, Ibaraki-ken(JP)**
Inventor: **Matsumoto, Masaetsu**
**Niihariryo 3-15-29, Inayoshi**
**Chiyodamura, Niihari-gun, Ibaraki-ken(JP)**
Inventor: **Yabe, Ryohei**
**4829-28, Nakane**
**Katsuta-shi(JP)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20**
**W-8000 München 86(DE)**

(54) Particle measuring aparatus.

(57) A particle measuring apparatus comprises a sample supporting apparatus (1104) for supporting a series of sample vessels (1101) which each stores one of plural samples to be measured, and for successively moving each of the sample vessels to a predetermined position; a sample storage means (3, 6, 8, 9) for sucking only a predetermined amount of sample stored in the sample vessel positioned at a predetermined position, for sucking only a predetermined amount of required reagent so as to react the sample with the reagent, and for discharging only a predetermined amount of reacted sample; a flow cell (1) including a first input port (101) for supplying a sheath fluid, a first flow path communicated with this first input port and contracted into a thin stream along a down stream, a second input port (103) for accepting the sample exhausted from the sample storage means, and a second flow path having an exhaust port communicated with the second input port, for exhausting the sample; and also a sheath fluid supplying apparatus (204 - 210) for supplying a necessary amount of sheath fluid to the first input port of this flow cell.

Rank Xerox (UK) Business Services

FIG.1

EP 0 474 187 A2

## BACKGROUND OF THE INVENTION

The present invention generally relates to a particle measuring apparatus, and more particularly to a particle measuring apparatus suitable for analyzing particles of blood such as white blood cells and red blood cells, or for measuring very fine particles of an inorganic compound in a fluid.

As a technical example of the conventional particle measuring apparatus, there has been disclosed in JP-A-59-16667 "the flow type automatic blood analyzing apparatus". Most of the conventional particle counting apparatuses are arranged by fluid circuits constructed of pipes and electromagnetic valves for controlling the fluid flowing through the pipes, as typically represented by the first-mentioned conventional particle measuring apparatus. The above-described apparatus of Japanese patent publication is such an apparatus for performing blood-cell counting operation, and is equipped with a system for executing two-stage dilution so as to count red blood cells, a system for performing both hemolysis and dilution in order to count white blood cells, and a system for performing dilution hemolysis so as to measure hemoglobin. Therefore, two complex cut valves are employed and a large quantity of dilution/stirring chambers and electromagnetic valves are utilized. Also, a plenty of tubes are provided under complex state in order to transfer samples and reagents among them.

In accordance with the particle measuring apparatus constructed of such a fluid circuit, system changing operation becomes very cumbersome, and also it is impossible to quickly measure different items with employment of the same apparatus. Furthermore, since variations in amounts of sample and reagent cannot be readily made even in a single measuring item and thus generalization of the conventional particle measuring apparatus is not so broad, most of the conventional oparticle measuring apparatus have been utilized as those exclusely used for the respective examination items.

On the other hand, very recently, depending upon progress in immunology and clinical medicine, new reagents as well as new dye agents have been developed. Accordingly, various types of measuring methods have been proposed. It is very rare case to utilize these reagents in the same prescription. Thus, in the measuring machines with employment of these reagents, preprocess operations different from each other are required with respect to the respective reagents.

A description of prior art will now be made more in detail. For example, in the blood cell measuring field, various operations are required such as single reagent adding/dyeing operation for a white blood cell classification; two-reagent adding/two-stage diluting operation with a dilution fluid and a hemolysis agent for blood cell counting operation; operation for directly applying an adjusted sample to a sensor, e.g., examination of lymph duct subset; operation for first dyeing an article and thereafter diluting the dyed article, e.g., examination of retricrocyte; and operation for adding several reagents to a single sample. Furthermore, with respect to the respective operations, a demand is made to obtain such an apparatus capable of readily changing or modifying a collection amount of sample, an addition amount of reagent and a time period of mixing/dyeing operation in conformity with characteristics of reagent.

To the contrary, in the conventional blood cell measuring apparatus, e.g., the above-described "automatic blood analyzing apparatus", since there are provided the sampling valves capable of collecting only a predetermined amount of samples and also the pipe connections of the pre-processing system through which the reagents and samples are necessarily flown in the same path, generalization of this type of apparatus is considerably lowered.

On the other hand, the discrete type automatic chemical analyzer with employment of the turntable has been opened in U.S. Patent No. 4,451,433 to Yamashita et al. In accordance with this chemical analyzer, a predetermined amount of sample is dispensed into the reaction vessels positioned on the turntable with employment of the pipetter type sampler, and the necessary reagent is dispensed into the corresponding reaction vessel with employment of other pipetters. The reaction fluid stored in the reaction vessel is transported to the measuring section by rotating the turntable, at which the chemical measurement with light is performed. While the turntable is further rotated, when the reaction vessel is transported to the cleaning section, this reaction vessel is cleaned at this section. Since a large quantity of reaction vessels are arranged on the turntable in a circumference form, a series of operation can be continuously performed according to a required operation sequence. This series of operation includes such that desirable amounts of samples are successively conducted to the respective reaction vessels, and also desirable amounts of reagents are conducted thereto, whereby reactions are executed, the optical measurements are performed, and the reacted samples are discharged from the reaction vessels which are then cleaned. However, if this series of operation is applied to the particle measuring apparatus, the optical measurement cannot be performed with storing the reaction fluids within the reaction vessels. This is because in the particle measuring apparatus, the sheath fluid is contracted into a thin stream in the flow cell along the down stream direction, the sample fluid is flown in this contracted thin stream under very thin conditions, and then the respective particles contained in the sample fluid must be optically measured.

SUMMARY OF THE INVENTION

An object of the present invention is to provide such a particle measuring apparatus with higher generalization that both a injection system and a reaction system for samples and reagents are readily acceptable for a plurality of measurement items, the discrete system is employed so as to quickly accept modifications of measurement conditions, and the flow system capable of measuring particles is employed for the measurement system.

It should be noted that although the following description is made of the blood analyzing apparatuses, the present invention is not only limited thereto, but also may be applied to measure various very fine particles such as biological particles in blood, particles of inorganic compound and the like.

To achieve the above-described object, a particle measuring apparatus according to the present invention comprises:

a flow cell including a first input port for supplying a sheath fluid, a first flow path communicated with said first input port and contracted into the thin stream in a down stream direction, a second input port for supplying a sample fluid, and a second flow path communicated with said second input port, and having an exhaust port for said sample fluid within said first flow path;

sheath fluid supplying means connected to said first input port of the flow cell, for supplying a predetermined amount of sheath fluid for a predetermined time period;

sample storage means for storing therein a sample to be measured;

a pipetter as a sample sucking/discharging means, for sucking a constant amount of stored sample to be moved to the second input port of the flow cell and for discharging a predetermined amount of sample;

sensing means for outputting signal values related to the respective particles to a signal processing means, which have been obtained by irradiating light or the like to the particles flowing through the first flow path of the flow cell and by sensing scattering light and fluorescent light derived from the respective particles;

signal processing means for calculating the signals related to the sensed particles;

input means for inputting an initiation command and also amounts of suction and discharge;

storage means for storing a series of operation which is performed by drive-means drivers builted in the respective mechanical means;

a sequence controller for feeding operation signals of the respective means to a pipetter-drive-means driver and a sample sucking/discharging driver in response to a data signal representative of contents of said series of operation from this storage means;

output means for displaying recording and printing out both a measurement value calculated at a calculation unit of said signal processing means and measurement condition and the like entered by the input means; and,

a control unit for controlling a process to write values of the sample suction amount and sample discharge amount entered by the input means into relevant positions of the storage means where a series of operation sequence has been stored, a process to send a signal indicative of this operation sequence to the sequence controller, and another process to send a result of the signal process means to the output means.

BRIEF DESCRIPTION OF THE DRAWINGS

Fig. 1 is a schematic block diagram for representing a construction of a particle measuring apparatus according to one preferred embodiment of the present invention;

Fig. 2 is a flow chart for representing a process performed when a selection is made of different measuring items in the particle measuring apparatus shown in Fig. 1 and also a process performed when setting of the measurement condition is changed;

Fig. 3 is a timing chart for representing operations in case that the most basic single reagent is added;

Figs. 4 to 7 are timing charts for showing operations of various elements employed in the particle measuring apparatus shown in Fig. 1;

Figs. 8 to 12 are timing charts for indicating operations corresponding to other measuring items;

Fig. 13 is a schematic block diagram for showing an arrangement of a particle measuring apparatus according to another preferred embodiment of the present invention;

Fig. 14 illustrates one example of a construction of a direct mixing pipetter;

Fig. 15 is a timing chart for representing operation of the direct mixing pipetter;

Figs. 16 to 19 are timing charts for showing basic operations at the respective operation steps; and,

Fig. 20 is an illustration where a compact linear actuator is mounted on an upper chamber of a pipetter and each of operations is independently performed by the respective syringe pump.

## DESCRIPTION OF THE PREFERRED EMBODIMENTS

Referring now to drawings, preferred embodiments of the present invention will be described.

### EMBODIMENT 1 : Turntable System

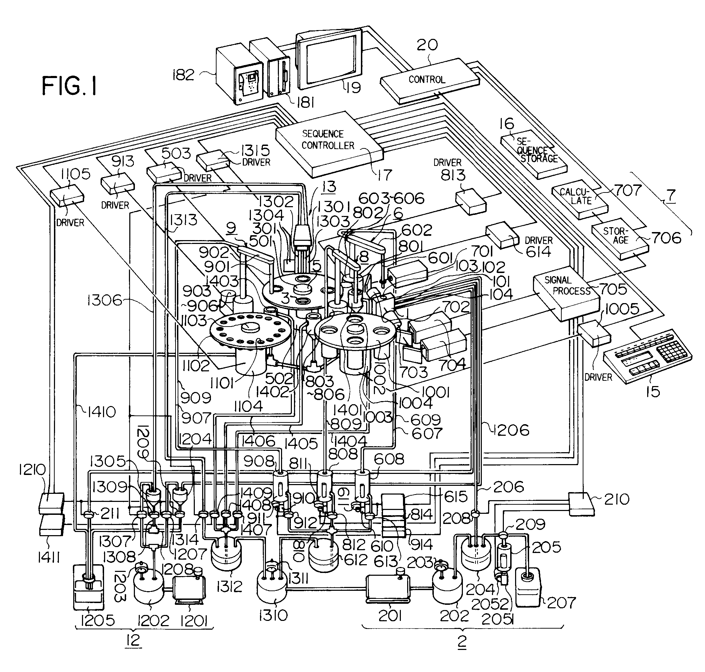

Fig. 1 is a schematic block diagram for representing an arrangement of a particle measuring apparatus according to one preferred embodiment of the present invention.

In Fig. 1, reference numeral 1 denotes a flow cell for forming a sheath flow. The flow-cell device as disclosed in U.S. Patent Application Serial No. 404,559 filed on September 8, 1989 may be suitably employed in this invention. The flow cell 1 is equipped with a supply port 101 for a sheath fluid; a sucking port 102 for a cleaning purpose; a sample supply port 103 for directly supplying a sample; and a waste fluid port 104 for a waste sheath flow fluid.

Reference numeral 2 indicates a sheath fluid supply means for supplying a sheath fluid to the flow cell 1. The sheath fluid supply means 2 is constructed of a compressor 201 for supplying compressed air used to supply fluid; a pressure chamber 202 for retaining therein the compressed air supplied from the compressor 201 so as to obtain pressure at stable; a pressure adjuster 203 belonging to the pressure chamber 202, for adjusting pressure therein; a sealing type tank 204 for temporarily retaining therein the sheath fluid for feeding fluid and for feeding the sheath fluid at a stable flow rate by way of the compressed air; and also a syringe pump 205 to add the sheath fluid, for supplying the sheath fluid to the sheath fluid feeding tank 204, which is consumed within a single measuring operation. The sheath fluid adding syringe pump 205 is constructed of a piston drive mechanism 2051, and a piston drive motor 2052 for driving this piston drive mechanism 2051.

Reference numeral 206 indicates a sheath fluid feeding pipe for connecting the sheath fluid feeding tank 204 and the flow cell 1, to feed the sheath fluid there through. Reference numeral 207 indicates a sheath fluid chamber for storing the sheath fluid which is added to the sheath fluid adding syringe pump 205. Reference numeral 208 represents a sheath fluid feed-control electromagnetic valve provided in a half-way of the sheath fluid feeding pipe 206, for controlling commencement and stop of feeding the sheath fluid. Reference numeral 209 represents a three-way valve for connecting the sheath fluid chamber 207, sheath fluid tank 204 and sheath fluid adding syringe pump 205. Normally, this three-way valve 209 connects the sheath fluid chamber 207 with the syringe pump 205, and connects the syringe pump 205 with the sheath fluid tank 207 in response to a control signal, which will be referred to as a "sheath fluid adding control electromagnetic valve". Reference numeral 210 denotes a sheath fluid driver for producing drive signals used for the sheath fluid feeding electromagnetic valve 208, sheath fluid adding control electromagnetic valve 209 and a drive motor of the sheath fluid adding syringe pump 205. Reference numeral 211 represents a flow-cell waste fluid controlling electromagnetic valve 211 provided on a halfway of a pipe of the flow cell 1 used for the sheath flow waste fluid, for controlling conduction of the waste fluid.

A reaction cuvette 3 is employed as a space for temporarily storing both a sample (specimen) and a reagent, a space where the sample and reagent reacts with each other, and also a space for mixing the sample with a diluting fluid, namely a sample storage means. There is a reaction cuvette fixing disk 301 functioning as a supporting member for supporting the sample storage means, in which a plurality of reaction cuvettes (four cuvettes in this preferred embodiment) are arranged along a circumference of this disk and spaced by 90° and also fixed thereon.

Reference numeral 5 denotes a supporting member drive means which is mounted at a center of the reaction cuvette fixing disk 301. The supporting member drive means 5 is equipped with a disk rotation driving mechanism 501 for rotating the disk at a certain angle along the circumference direction; a disk driving motor 502 mounted on the disk rotation driving mechanism 501, for rotating the disk in response to an operation instruction signal; and, a disk-drive-motor driver 503 for producing a disk drive signal upon receipt of a disk drive instruction signal from a sequence controller 17.

Reference numeral 6 denotes a flow-cell pipetter for sucking an adjusted sample from the reaction sample 3 and for discharging an adjusting sample at a constant flow rate to the sample supplying port 103 of the flow cell 1, and is constructed of a sample sucking pipe 601, a pipetter drive means and a sample sucking/discharging means.

The pipetter driving means is arranged by a pipetter arm 602, at a tip portion of which the sample sucking pipe 601 is mounted downwardly in a vertical direction, and which is pivoted around the other end thereof as a pivot center; a pipetter arm pivoting mechanism 603 mounted on the pivot center of the pivotter arm 602, for moving the sample sucking pipe 601 to a position of the reaction cuvette 3 and a position of the sample supplying port for the flow cell 1; a pivoting motor 604 mounted on the pivoting mechanism 603, which is rotated upon receipt of a drive signal from the driver 614; an elevator drive mechanism 605 for supporting both the pivoting mechanism 603 and the pipetter arm 602, for elevating these entire mechanisms; and also an elevator drive motor 606 mounted on the elevator drive mechanism 605, which is rotated in response to a drive signal from the driver 614.

The sample sucking/discharging means is constructed of a sample-dispensing hydraulic fluid 607 for transferring sucking/discharging operation to the sample; a sample syringe 608 arranged by a syringe and a piston, for sucking/discharging the sample-dispensing hydraulic fluid 607; a sample-dispensing hydraulic fluid pipe 609 for connecting the sample syringe 608 with the sample sucking pipe 601, and also a piston drive mechanism 610 connected to the piston of the sample syringe 608, for driving the piston. The sample sucking/discharging means further comprises: a piston drive motor 611 mounted in the piston drive mechanism 610, and rotated in response to an operation signal from the driver 615; a dispensing hydraulic fluid tank 612 for storing therein the dispensing hydraulic fluid; an electromagnetic valve 613 for controlling the sampling operation fluid, provided at a halfway in a pipe to connect the dispensing hydraulic fluid tank 612 and the sample syringe, for controlling a supply of the dispensing hydraulic fluid from the dispensing hydraulic fluid tank 612; a pipetter driving driver 614 for feeding drive signals to the pivoting motor 606 and elevator driving motor 606 by receiving the operation instruction signal for the sample pipetter 6 from the sequence controller 17; and also a sample sucking/discharging driver 615 for feeding signals to the piston drive motor 611 and the electromagnetic valve 613 for controlling the sample operation by receiving an operation instruction signal for sucking/discharging the sample from the sequence controller 17.

Reference numeral 7 indicates a sensor means positioned so as to sandwich the flow cell 1 therebetween. The sensor means 7 is so arranged by a laser 701 for illuminating cells flowing through the flow cell 1; a laser collecting optical system 702 interposed between the laser 701 and flow cell 1, for collecting the laser light onto blood cells flowing through a path of the flow cell 1; a scattering/fluorescent light collecting optical system 703 for collecting fluorescent light and scattering light which are irradiated from the blood cell flow through the path of the flow cell 1; and an optical sensor 704 for receiving the light collected from the light collecting optical system 703 and for converting an intensity peak of the received light into an electric signal. The sensor means 7 further comprises: a signal processing unit 705 for A/D (analog-to-digital) converting both values of the light intensity signals of the respective cells which have been converted into the electric signals by the optical sensor 704, and a quantity of optical pulses per unit time, namely a quantity of cells which have passed (will be referred to "a count number"); a signal value storage unit 706 for temporarily storing therein these signals; and a calculating unit 707 for receiving information about each of the blood cells sensed by the optical sensor 704 from the signal value storage unit 706 for processing this information to obtain an information signal which is supplied to an output means. It should be noted that although the sensor 704 is of the optical type, any other sensors may be alternatively employed which, for instance, measure changes in electric resistance values when particles pass through a very small hole formed at a downstream within the flow cell.

Reference numeral 8 represents a reagent pipetter for sucking a predetermined amount of reagent to be supplied to the reaction cuvette 3. The reagent pipetter 8 is mainly constructed of a reagent sucking pipe 801, a reagent pipetter driving means, and a reagent sucking/discharging means.

The reagent pipetter driving means is arranged by: a reagent pipetter arm 802, at a lower tip portion of which the reagent sucking pipe 801 is mounted in a vertical direction and which is pivoted around the other end thereof as a pivot center; a pipetter arm pivoting mechanism 803 mounted at the pivot center of the reagent pipetter arm 802, for moving the reagent sucking pipe 801 to a position of the reaction cuvette 3 and a position of the reagent bottle; a pivoting motor 804 mounted on the pivoting mechanism 803, which is rotated by receiving a drive signal from a driver 813; an elevator driving mechanism 805 for supporting the pivoting mechanism 803 and the reagent pipetter arm 802 and for elevating the entire arrangement thereof; and also an elevator driving motor 806 mounted on the elevator driving mechanism 805, which is rotated by receiving the drive signal from the driver 813.

The reagent sucking/discharging means is arranged by a reagent-dispensing hydraulic fluid 807 for transferring sucking/discharging operations to a reagent within the reagent sucking pipe 801; a reagent syringe 808 constructed of a syringe and a piston, for sucking/discharging the dispensing hydraulic fluid 807; a reagent-dispensing hydraulic fluid pipe 809 for connecting the reagent syringe 808 with the reagent sucking pipe 801; a piston drive mechanism 810 coupled to the piston of the reagent syringe 808, for driving the piston; a reagent piston mounted in the piston drive mechanism 810, which is rotated in response to the operation signal from the driver; and an electromagnetic valve 812 for controlling the reagent-dispensing hydraulic fluid, which is provided at a halfway of a pipe connecting the dispensing fluid tank 612 and the syringe, and controls a supply of the dispensing fluid from the dispensing fluid tank 612.

This reagent sucking/discharging means further comprises: a reagent pipetter driver 813 for supplying drive signals to the pivoting motor 804 and elevator driving motor 806 by receiving an operation instruction signal of the reagent pipetter 8 derived from the sequence controller 17; and a reagent sucking/discharging driver 814 for transferring drive signals to the piston drive motor 811 and the electromagnetic valve 812 for controlling the reagent-dispensing hydraulic fluid in response to an operation instruction signal of sucking/discharging the reagent derived from the sequence controller 17.

Reference numeral 9 denotes a sample pipetter for sucking a predetermined amount of sample from a blood cuvette 1101 and supplying the sample to the reaction cuvette 3. The sample pipetter 9 is constructed of a sample sucking pipe 901, a sample pipetter driving means and a sample discharging means.

The sample pipetter driving means is arranged by: a sample pipetter arm 902, at a lower tip portion of which the sample sucking pipe 901 is mounted in a vertical direction and which is pivoted around the other end thereof as a pivot center; a pipetter arm pivoting mechanism 903 mounted at the pivot center of the sample pipetter arm 902, for moving the sample sucking pipe 901 to a position of the reaction cuvette 3 and a position of the sample a cuvette; a pivoting motor 904 mounted on the pivoting mechanism 903, which is rotated by receiving a drive signal from a driver 913; an elevator driving mechanism 905 for supporting the pivoting mechanism 903 and the sample pipetter arm 902 and for elevating the entire arrangement thereof; and also an elevator driving motor 906 mounted on the elevator driving mechanism 905, which is rotated by receiving the drive signal from the driver.

The sample sucking/discharging means is arranged by a sample-dispensing hydraulic fluid 907 for transferring sucking/discharging operations to a sample; a sample syringe 908 constructed of a syringe and a piston, for sucking/discharging the sample dispensing hydraulic fluid 907; a sample-dispensing hydraulic fluid pipe 909 for connecting the sample syringe 908 with the sample sucking pipe 901; a piston drive mechanism 910 coupled to the piston of the sample syringe 908, for driving the piston; a piston mounted in the piston drive mechanism 910, which is rotated in response to the operation signal from the driver 914; and an electromagnetic valve 912 for controlling the sample-dispensing hydraulic fluid, which is provided at a halfway of a pipe connecting the dispensing fluid tank 612 and the syringe, and controls a supply of the dispensing fluid from the dispensing fluid tank 612.

This sample sucking/discharging means further comprises: a sample pipetter driver 913 for supplying drive signals to the pivoting motor 904 and elevator driving motor 906 by receiving an operation instruction signal of the sample pipetter derived from the sequence controller 17; and a sample sucking/discharging driver 914 for transferring drive signals to the piston drive motor 911 and the electromagnetic valve 912 for controlling the sample-dispensing hydraulic fluid in response to an operation instruction signal of sucking/discharging the sample derived from the sequence controller 17.

The reagent storage means is arranged by a reagent bottle 1001 for storing a reagent; a reagent fixing disk 1002 for holding the reagent bottle 1001 on a pivot region of the reagent pipetter arm 802; a reagent-fixing-disk rotating mechanism 1003 for rotating the reagent bottle 1001 to a predetermined position so as to supply a preselected reagent; a reagent-fixing-disk rotating motor 1004 mounted in the reagent-fixing-disk rotating mechanism 1003, and rotated in response to the drive signal from the driver; and also a reagent driver 1005 for supplying a drive signal to the reagent-fixing-disk rotating motor 1004.

There are provided a blood cuvette 1101 for storing blood, and a sample driving means for sequentially supplying this blood cuvette 1101 onto the pivot region of the sample pipetter arm 902.

The sample driving means is constructed of a blood-cuvette fixing disk 1102 for fixing the blood cuvette 1101 on the circumference thereof; a rotating mechanism 1103 for the blood cuvette fixing disk, which is mounted on the center of the blood-cuvette fixing disk 1102, and sequentially supply the disks to the pivot position of the sample pipetter 9; a motor 1104 for rotating the blood-cuvette fixing disk, which is rotated in response to the drive signal from the driver and is mounted within the rotating mechanism 1103 for the blood-cuvette fixing disk; and furthermore a sample driver 1105 for supplying a driving signal to the motor 1104 for rotating the blood-cuvette fixing disk by receiving an operation signal of the blood cuvette 1101 from the sequence controller 17.

Reference numeral 12 indicates a flow-cell cleaning fluid sucking means for sucking both the remaining sample and cleaning fluid thereof after the measurement has been completed at the flow cell 1.

The flow-cell cleaning fluid sucking means comprises: a vacuum pump 1201 for producing negative pressure to suck a fluid; a vacuum vessel 1202 connected to the vacuum pump 1201, for maintaining the stable negative pressure; a vacuum pressure sensor 1203 fixed to the vacuum vessel 1202, for stably maintaining the negative pressure in the vacuum vessel; a tank 1204 for sucking the flow-cell cleaning fluid, which temporarily stores the sucked flow-cell cleaning fluid every time the measurement is performed; and also a wrote fluid vessel 1205 for storing the cleaning fluid which is discharge from the flow-cell cleaning fluid sucking tank 1204 every time the measurement is carried out.

The flow-cell cleaning fluid sucking means further comprises: a flow-cell cleaning fluid sucking pipe 1206 for connecting the sucking port 102 for cleaning the flow cell with the tank 1204 for sucking the flow cell cleaning fluid; an electromagnetic valve 1207 for controlling sucking of the flow-cell cleaning fluid, which is provided in a halfway of the flow-cell cleaning fluid sucking pipe 1206 and controls starting and stopping suction of the flow-cell cleaning fluid; a pipe 1208 for discharging the flow-cell cleaning fluid, which connects the tank 1204 for sucking the flow-cell cleaning fluid with the waste fluid vessel 1205, and discharges or exhausts the flow-cell cleaning fluid; an elecrromagnetic valve 1209 for controlling the discharge of the flow-cell cleaning fluid, which is provided in a halfway of the pipe 1208 for exhausting the flow-cell cleaning fluid, and controls both a commencement and a stop of discharging the cleaning fluid; and also a driver 1210 for sucking the flow-cell cleaning fluid, which sends drive signals to the electromagnetic valve 1207 for controlling the flow-cell cleaning fluid suction, the electromagnetic valve 1209 for controlling the flow-cell cleaning fluid discharge, and the electromagnetic valve 211 for controlling the flow-cell waste fluid in response to the operation signals related to suction of the cleaning fluid and exhaust of the waste fluid from the sequence controller 17.

Reference numeral 13 represents a sample-storage-means cleaning means for sucking the sample remaining in the reaction cuvette 3 and for cleaning the cuvette 3.

The sample-storage-means cleaning means 13 comprises: a remaining sample suction pipe 1301 having an input port which is lowered into the remaining sample of the reaction cuvette 3 so as to suck the remaining sample; a cleaning fluid exhaust pipe 1302 having an output port which is fixed in parallel with the remaining sample suction pipe 1301 and is lowered into the reaction cuvette 3 so as to exhaust the cleaning fluid; a cleaning pipe elevating mechanism 1303 for elevating these pipes 1301 and 1302 in the reaction cuvette 3 with fixing these pipes in a parallel form; and furthermore a cleaning-pipe elevating motor 1304 provided in the cleaning pipe elevating mechanism 1303 and rotated in response to the drive signal from the driver.

The sample-storage-means cleaning means 13 further comprises: a tank 1305 for sucking a reaction cuvette cleaning fluid, for temporarily storing therein the remaining sample sucked from the remaining sample suction pipe 1301; a pipe 1306 for sucking the reaction cuvette cleaning fluid, for transporting the cleaning fluid from the remaining sample suction pipe 1301 to the tank 1305 for sucking the reaction cuvette cleaning fluid; and also an electromagnetic valve 1307 for controlling suction of the reaction cuvette cleaning fluid, for controlling both suction commencement and stop of the cleaning fluid in response to the drive signal from the driver 1315, which is provided in a halfway of the pipe 1306 for sucking the reaction cuvette cleaning fluid.

The sample-storage-means cleaning means 13 furthermore includes: a pipe 1308 for exhausting the reaction cuvette cleaning fluid, which connects the tank 1305 for sucking the reaction cuvette cleaning fluid and the waste fluid vessel 1205 and exhausts the cleaning fluid; an electromagnetic valve 1309 for controlling exhaust of the reaction cuvette cleaning fluid, which is provided in a halfway of the pipe 1308 for exhausting the reaction cuvette cleaning fluid, and controls the exhaust commencement and stop of the cleaning fluid in response to the drive signal from the driver 1315; a cleaning-fluid pressure vessel 1310 for storing therein compressed air supplied from the compressor 201 and obtaining desirable pressure in a stable manner; a pressure adjuster 1311 for the cleaning-fluid pressure tank, which is attached to the pressure vessel 1310 and adjusts pressure in the pressure vessel; a cleaning fluid tank 1312 for storing the cleaning fluid to be exhausted to the reaction cuvette 3 and also the cleaning fluids to be supplied to the respective pipetter cleaning chambers, which is continuously compressed under constant pressure by the cleaning-fluid pressure vessel 1310; a pipe 1313 for supplying the reaction-cuvette cleaning fluid, which connects the cleaning-fluid exhaust pipe 1302 and cleaning fluid tank 1312, and passes the cleaning fluid therethrough; an electromagnetic valve 1314 for controlling exhaust of the reaction-cuvette cleaning fluid, which is provided in a halfway of the pipe 1313 for supplying the reaction-cuvette cleaning fluid, and controls the exhaust commencement and stop of the cleaning fluid; and also a reaction-cuvette cleaning driver 1315 for transferring drive signals to the electromagnetic valve 1307 for controlling suction of the reaction-cuvette cleaning fluid, the electromagnetic valve 1309 for exhausting the reaction-cuvette cleaning fluid, and the electromagnetic valve 1314 for controlling exhaust of the reaction cuvette cleaning fluid in response to the operation signal from the sequence controller 17.

There are also provided cleaning means for cleaning out sides of the respective pipetters.

This cleaning means comprises: a flow-cell pipetter cleaning tub 1401 positioned between the flow cell 1 and the reaction cuvette 3, for cleaning with the cleaning fluid, an outside of the sample suction pipe 601 of the flow-cell pipetter 6; a reagent pipetter cleaning tub 1402 positioned between the reagent bottle 1001 and reaction cuvette 3, for cleaning with the cleaning fluid, an outside of the reagent suction pipe 801 of the reagent pipetter 8; a sample pipetter cleaning tub 1403 located between the blood cuvette 1101 and the reaction cuvette 3, for cleaning with the cleaning fluid, an outside of the sample suction pipe 901 of the sample pipetter 9; a pipe 1404 for supplying a flow-cell pipetter cleaning fluid, which connects the cleaning fluid tank 1312 with the flow-cell pipetter cleaning tub 1401 and supplies the cleaning fluid to the cleaning tub; and also a pipe 1405 for supplying a reagent pipetter cleaning fluid, which connects the cleaning fluid tank 1312 with the reagent pipetter cleaning tub 1402 and supplies the cleaning fluid.

The cleaning means also comprises: another pipe 1406 for supplying a sample pipetter cleaning fluid, which connects the cleaning fluid tank 1312 with the sample pipetter 9 and supplies the cleaning fluid to the cleaning tub; an electromagnetic valve 1407 for controlling a flow-cell pipetter cleaning fluid, which is employed in a halfway of the pipe 1404 for supplying the flow-cell pipetter cleaning fluid and controls starting and stopping the supply of the cleaning fluid; an electromagnetic valve 1408 for controlling a reagent-pipetter cleaning fluid, which is provided in a halfway of the pipe 1405 for supplying the reagent pipetter cleaning fluid and controls starting and stopping the supply of the cleaning fluid; an electromagnetic valve 1409 for controlling a sample-pipetter cleaning fluid, which is provided in a halfway of the pipe 1406 for supplying the sample pipetter cleaning fluid and controls starting and stopping the supply of the cleaning fluid; a pipe 1410 for a cleaning-tube waste fluid, which collects the waste fluids of the respective cleaning tubs and conducts the collected waste fluids into the waste-water vessel; and further a pipetter cleaning driver 1411 for transmits drive signals to the electromagnetic valve 1407 for controlling the flow-cell pipetter cleaning fluid, the electromagnetic valve 1408 for controlling the reagent-pipetter cleaning fluid, the electromagnetic valve 1409 for controlling the sample-pipetter cleaning fluid in response to the operation instruction signal derived from the sequence controller 17.

An operation panel 15 functioning as an input means, may not only initiate the apparatus, input amounts of sucking/exhausting the sample and reagent, but also select a proper operation item from the prepared operation items.

A control unit 20 transmits the operation signals to the controller 17 in accordance with the sequence read out from the sequence storage unit 16 based on the commands entered by an operator via the operation panel 15. The controller 17 transmits the operation signal to the corresponding driver every predetermined time step in order to drive a desirable mechanism. Operation sequences among 6 sorts of operations will now be explained.

## OPERATION 1

Operation 1 is such operation that a single reagent is added to a sample or specimen, and will be executed in accordance with the following sequence:

a) The sample sucking/discharging means is driven to fill a dispensing hydraulic fluid up to an opening end of the sample suction pipe 901, or up to a place slightly before this opening end. Similarly, dispensing hydraulic fluids are filled in the respective suction pipes 601, 801 and 901 with respect to the reagent pipetter 8 and the flow-cell pipetter.

b) The sample-pipetter driving means 903 to 906 are driven so as to move the opening end of the sample suction pipe 901 to the sample suction position of the sample cuvette and also to be dipped into the sample.

c) The sample sucking/discharging means 910 to 912 are driven so as to suck a predetermined amount of a sample fluid.

d) The sample pipetter driving means 903 to 906 are driven, whereby the opening end of the sample suction pipe 901 is moved to a sample discharge position of the reaction cuvette and a predetermined amount of sample fluid is discharged or exhausted to the reaction cuvette.

e) The supporting member driving means 5 is driven so as to move the reaction cuvette to a reagent exhaust position.

f) The reagent pipetter driving means 803 to 806 are driven so that the opening end of the reagent suction pipe 801 is moved to the reagent exhaust position of the reaction cuvette.

g) The sample sucking/discharge means 810 and 811 are driven in order to exhaust a predetermined amount of sucked reagent.

h) The pipetter drive means 603 to 606 are driven to dip the opening end of the sample suction pipe 601 into the sample of the reaction cuvette.

i) The sample sucking/discharging means 610 and 611 are driven in order to suck a predetermined amount of sample fluid.

j) The pipetter driving means 603 to 606 are driven thereby to move the opening end of the sample suction pipe 601 to a position of the sample supplying port 103 of the flow cell 1, and to connect this opening end with this sample supplying port 103.

k) The sheath-fluid driving means 208 is driven so as to supply the sheath fluid to the flow cell 1.

l) The sample sucking/discharging means 610 and 611 are driven in order to discharge a predetermined amount of sucked sample.

## OPERATION 2

Operation 2 is such an operation that a plurality of reagents are successively added.

After the activations f) and g) of the operation 1 are repeated in accordance with the reagents, the activations defined after f) are carried out.

## OPERATION 3

Operation 3 is such an operation that the sample which has been processed is employed and is directly conducted to the flow cell 1.

The reaction cuvette fixing disk 301 is directly moved to the suction position of the flow cell pipetter 6 by the supporting member driving means 5 under such conditions that the activations f) and g) of the above-described operation are omitted and the activations defined after h) are executed.

## OPERATION 4

Operation 4 is such an operation that a reagent is added to a sample, a portion of the added sample is collected by the sample pipetter 9, the reaction cuvette fixing disk 301 is rotated, and this sample portion is exhausted to another reaction cuvette 3, to which a reagent is further added.

## OPERATION 5

Operation 5 is such an operation that the single reagent adding operation of the above-described operation 1 is continuously performed.

## OPERATION 6

The double-stage mixture of the operation 4 is continuously carried out.

The sequence controller 17 receives a data signal representative of a series of operation contents from the sequence chart storage unit 16 and sends operation signals to the sample pipetter 9, reagent pipetter 8, flow-cell pipetter 6, and the respective drivers of the supporting member driving means for the reaction cuvette every step with a predetermined time period.

The output means is constructed of a calculating unit 707, a floppy disk device 181 and a printer 182 for recording thereon the contents inputted from the operation panel 15, and a television monitor 19 for displaying these contents.

A control unit 20 reads out the operation items entered via the operation panel 15 by the operator; selects the operation content corresponding to the read item from the data stored in the sequential chart storage unit 16; transmits this data to the sequence controller 17; writes a sample, a suction amount of reagent and an input value of reagent which have been similarly inputted from the operation panel 15, into relevant memory places for a series of operation contents stored in the sequence chart memory unit 16; and transmits it to the sequence controller 17 and further controls such operations that the calculation results of the calculating unit 707 is sent to the output means.

Description of operations for Turntable Method

Operations of the particle measuring apparatus with the above-described arrangements, according to the preferred embodiment shown in Fig. 1 will now be described.

It should be noted that the present particle measuring apparatus may be realized with various measurements by only changing the set values and drive times of the respective constructive elements. The basic sequences of these various operations have been stored in the sequential chart storage unit 16. In response to the setting item selected by the operation panel 15, the corresponding basic sequence is read out from the sequence chart storage unit 16.

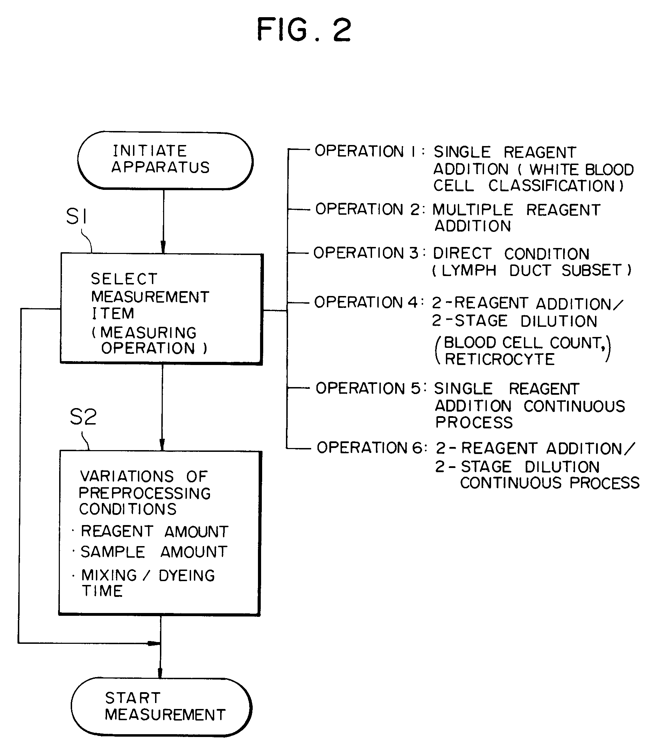

First, referring now to Fig. 2, the setting operation by the operation panel 15 will be described. Fig. 2 represents both the sequences prepared in the particle measuring apparatus and the items which can be measured based on these sequences and correspond to the above-described basic operations 1 to 6.

At a step S1, a selection is made of one operation from the operations 1 to 6. It should be understood that the single reagent addition as defined in the operation 1 implies that a reagent is added to a sample only once so as to execute dyeing or a reaction, which may be utilized to, for instance, classify and count white blood cells. In case when there are large quantities of reagents to be added, the multi-reagent addition sequence of the operation 2 is selected. The direct conduction of the operation 3 implies such a sequence that the adjusted sample is directly conducted into the flow cell without any preprocess operation. For instance, as in the measurement of subset of lymph ducts, the previously dyed samples are measured. Also when a selection is made of such a sequence as two-stage dilution that after the addition of the first diluting fluid has been accomplished, a portion thereof is collected and the diluting fluid is again added, a selection is made of the item as to the two-reagent addition/two-stage dilution of the operation 4. This is used in measuring reticrocyte, or counting read blood cells. When these measurements are continuously preformed, either the single reagent addition continuous process of the operation 5, or the two-reagent addition/two-stage dilution continuous process thereof is selected.

When an operator selects one sequence in conformity with the measurement item at the step S1, this measuring apparatus demands entries of amounts of reagent and sample from the operation panel 15 at a step S2 as a subsequent selection item. If, for instance, there is a small amount of samples, or a large amount of reagent is added, setting the amounts of sample and reagent is directly inputted. In case of the normal measurement, no change is made at the step S2 and the actual measurement is commenced.

Now, a description will be made of such a case that an operator selects the second item, i.e., the single reagent addition (while blood-cell classification). Upon completion of selection for the measurement item by the operation panel 15, the control unit 20 reads out the input values thereof; reads out the sequence for the single reagent addition (white blood-cell classification) from the sequential chart storage unit 16; and interpretes this sequence to obtain an operation signal which will be than transmitted to the sequence controller 17. The sequence controller 17 transmits this operation signal to each of the drivers every a predetermined time step (every 0.1 second in this case). Upon receipt of this signal, the respective drivers send the drive signals to the motors and electromagnetic valves connected to the relevant driver every time step. In case of white blood-cell classification, the following concrete operations are carried out.

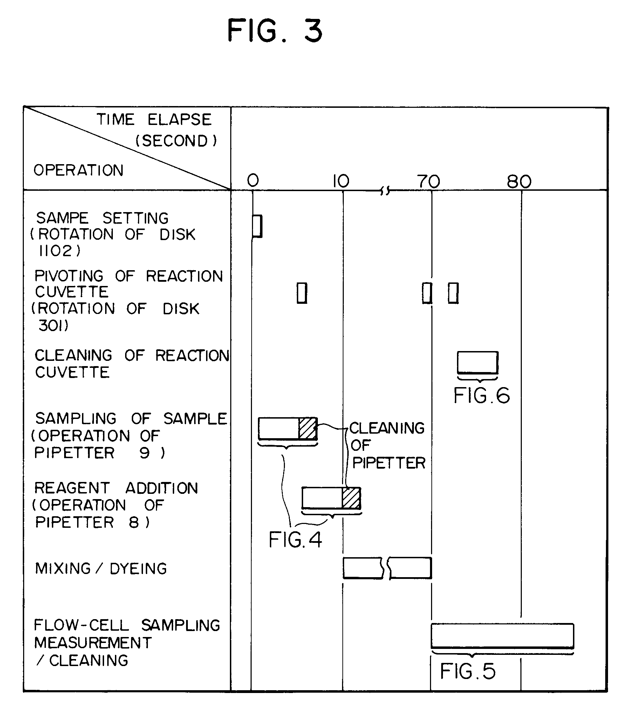

Referring now to Fig. 3, the operations with respect to the white blood-cell classification will be described. This operation is mainly subdivided into seven stages.

At a first stage, the sample disk 1102 for fixing the sample (i.e., the blood in this case) is rotatably moved to the position where the sample pipetter 9 is collected. Next, at a second stage, the sample is sampled within the reaction cuvette 3. Also, at a third stage, the reaction cuvette 3 is rotatably moved. Further at a fourth stage, the reagent is sampled and the sample is mixed with the reagent. After this operation has been completed, the sample is transported from the reaction cuvette 3 to the flow cell 1 and measured at a fifth stage. Thereafter, at a sixth stage, both the flow cell 1 and the flow-cell pipetter 6 are cleaned. Finally, at a seventh stage, the cuvette 3 is cleaned. The sequences of the respective operations and the conditions of time overlapping are shown in Fig. 3.

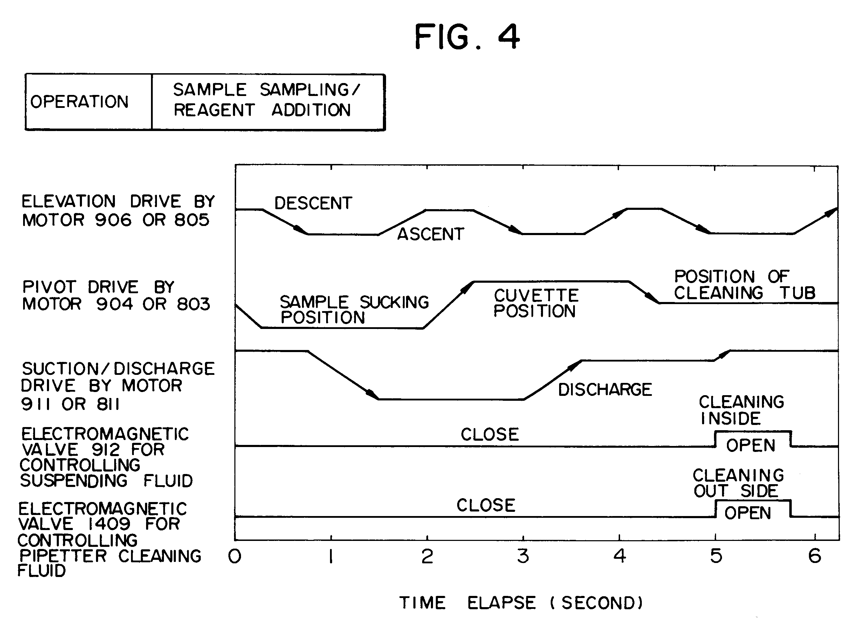

As to these operations, a more detailed operation will now be explayed with reference to Figs. 4 to 7.

First of all, a signal flow when the signals from the sequence controller 17 are received and before the motor is driven will now be described. The sequence controller 17 transmits the signal every 0.1 second. At time when the motor is driven, the transmission of the signal pulses having the frequency corresponding to the rotation speed of the motor is commenced. At time when the motor is stopped, the transmission of this signal pulses is stopped. Upon receipt of this signal pulse, the driver sends to the motor, a drive pulse signal corresponding to the energizing method for the pulse motor.

Subsequently, a signal flow to the electromagnetic valve will now be described. At time when the electromagnetic valve is actuated, the sequence controller 17 starts to transmit the pulse signal to the driver. In response to this pulse signal, the driver applies an operation voltage to the electromagnetic valve so as to be driven. When the supply of the pulse signal from the sequence controller 17 is interrupted, the driver stops the application of the operation voltage so that the operation of the electromagnetic valve is released.

The rotation operations of the sample-cuvette fixing disk 1102 and the reaction-cuvette fixing disk 301 are commenced in accordance with timings as shown in Fig. 3. At the starting time, the sequence controller 17 sends signal pulses corresponding to a predetermined drive speed and a predetermined drive speed and a predetermined drive pulse to the disk driver 503 and sample driver 1105. Thereafter, these drivers transmit drive pulse signals to the respective motors so as to rotate them.

Fig. 4 is a timing chart for explaining the sample sampling operations shown in Fig. 3, and the adding operation of the reagents having the completely same sequence as that of the above sampling operations. Although the operations of the respective motors will now be explained in this example, the flow of the signals derived from the sequence controller 17 has been previously explained. First, the sample pipetter 9 is positioned above the sample-pipetter cleaning tub 1403 as an initial condition. Under such a condition when the pivot driving motor 904 is rotated, the pipetter is moved over the sample cuvette 1101 for collecting the sample. Subsequently, the elevator driving motor 906 is rotated so as to dip the tip portion of the sample suction pipe 901 into the sample. Next, the piston driving motor 911 is energized to suck a predetermined amount of sample. This suction amount may be readily varied by changing the drive step number of the piston driving motor 911 for the sequence chart. Thereafter, the elevator driving motor 906 is operated to pick up the tip portion of the sample suction pipe 901 from the sample, and then the pivot driving motor 904 causes the tip portion of the pipe 901 above the reaction cuvette 3. The elevator driving motor 906 is again operated so that the sample suction pipe 901 descends until this pipe 901 touches the bottom of the reaction cuvette 3. Here, the piston driving motor 911 is operated to discharge or exhaust a predetermined amount of sample. This exhaust amount may be easily changed. Thereafter, the elevator driving motor 906 is operated so as to move the pipe 901 over the cuvette 3; the pivot driving motor 904 is energized to pivot the pipetter arm 902 and move the sample suction pipe 901 above the sample pipetter cleaning tub 1403. Next, the elevator driving motor 906 is driven whereby the pipe 901 descends into the cleaning tub 1403. At the same time, both the electromagnetic valve 912 for controlling the sample-dispensing hydraulic fluid and the electromagnetic valve 1409 for controlling the sample-pipetter cleaning fluid are brought into opening states, the dispensing hydraulic fluid 907 is supplied from the inside of the sample suction pipe 901 and the sample-pipetter cleaning fluid is supplied from the outside thereof.

Also, the operations of the reagent sampling are similar to the above-described sample sampling operations.

The supplying operations of the pipetter cleaning fluid and the sample-dispensing hydraulic fluid will now be explained. A portion of the compressed air supplied from the compressor 201 is furnished to the cleaning-fluid pressure vessel 1310. The pressure in the cleaning-fluid pressure vessel is continuously adjusted to be a preselected value by the pressure adjustor 1311 for the cleaning-fluid pressure vessel. One portion of the compressed air within this pressure vessel 1310 is supplied to the cleaning-fluid tank 1312 and another portion thereof is supplied to the dispensing hydraulic fluid tank 612. Since both the cleaning fluid tank and the dispensing hydraulic fluid tank are sealed vessels, the fluids present in the hydraulic fluid pipes connected to these tanks are pressed at the same pressure. Accordingly, when the electromagnetic valves are opened, the supply of the fluids is commenced.

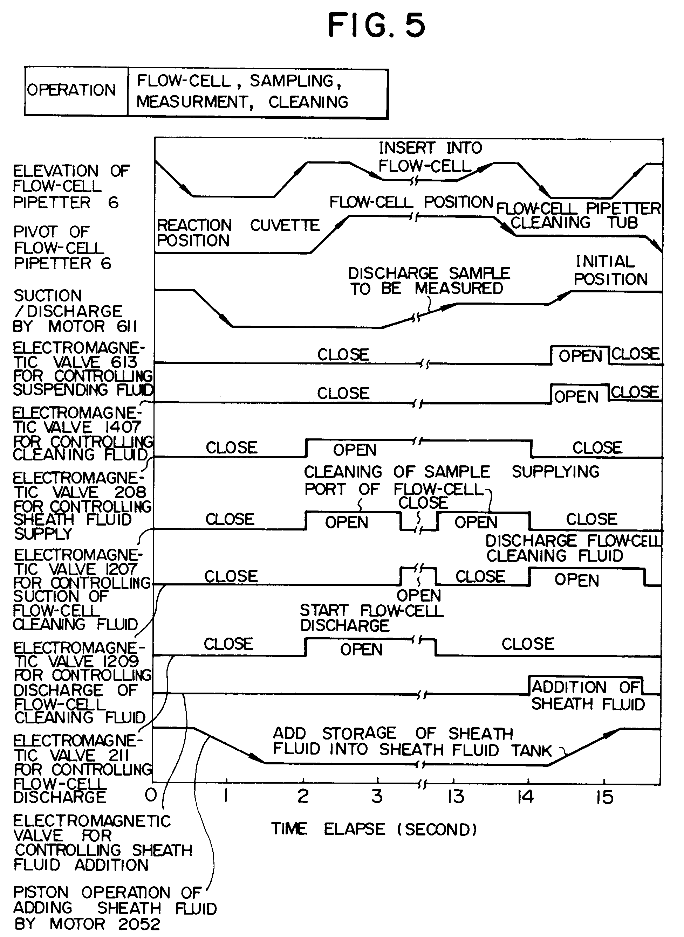

Referring now to Fig. 5, the sampling operations for the sheath flow shown in Fig. 3 will be described in detail. The operations to collect the adjusted sample from the reaction cuvette 3 and to transport this sample to the flow cell 1 are similar to those when the sample of the sample sampling operation is collected. When the pipetter 6 is pivoted and then starts to be moved above the sample supply port 103 of the flow cell 1, the electromagnetic valve 208 for controlling the sheath fluid dispensing operation is brought into the open condition at the flow cell 1, and the supply of the sheath fluid is commenced. Also, at the same time, the electromagnetic valve 211 for controlling the flow-cell waste fluid is brought into the open condition and the sheath fluid is exhausted to the waste fluid vessel 1205. Furthermore, although a portion of the sheath fluid overflows at the sample supplying port 103, the electromagnetic valve 1207 for controlling the flow-cell cleaning fluid suction is brought into the open state and the overflowing cleaning fluid is sucked from the cleaning fluid sucking port 102 of the flow cell. When the pipetter 6 reaches above the flow cell, the elevator driving motor 606 is operated so that the sample suction pipe 601 descends and a sealing chip positioned at the opening end of this pipe 601 is positioned in contact with the inner circumference of the sample supplying port 103 to establish sealing effects. Under this condition, when the piston driving motor 811 is operated so as to gradually exhaust the sample within the pipe, a sheath flow where the sample flow is narrowed by a diameter of several tens ($\mu$m) is formed at the capillary tube portion of the flow cell 1, and then a predetermined measurement is carried out. During this time period, the electromagnetic valve 1207 for controlling the flow-cell cleaning fluid suction is brought into the close condition, and instead thereof, the electromagnetic valve 1209 for controlling the flow-cell cleaning fluid exhaust, which controls exhaust of the cleaning fluid which has been sucked, is brought into the open condition and then the cleaning fluid is discharged into the waste fluid vessel 1205. Upon completion of the measurement, the elevator driving motor 606 is operated to lift up the sample suction pipe 601 whereby this suction pipe 601 is released. At the same time, the electromagnetic valve 120 for controlling the flow-cell cleaning fluid suction becomes the open state, whereas the electromagnetic valve 1209 for controlling the flow-cell cleaning fluid becomes the close state. As the sheath fluid strongly overflows from the sample supplying port 103 under this state, the sheath fluid which again overflows from the suction port 102 of the flow cell cleaning fluid is sucked. At this time, the samples remaining in the flow cell are completely washed together with this sheath fluid. After the cleaning operation is continued for approximately 1 second, the electromagnetic valve 1207 for controlling the cleaning fluid suction is closed, the exhaust controlling electromagnetic valve 1209 is brought into the open state and the sucked cleaning fluid is released. When the sample suction pipe 601 is lifted upward the flow cell 1, the pivot drive motor 604 is energiged and the pipe 601 is moved above the flow-cell pepitter cleaning tub 1401. The elevator driving motor 606 is again operated, the pipe 601 is caused to descend into the cleaning tub 1404, and both the electromagnetic valves 613 and 1407 are operated so that both the inside and outside of the pipe 601 are cleaned in a similar manner of the sample pipetter 9. At the same instant, the piston drive motor 611 is driven, and the initial setting operation of the piston position is performed. When such an operation is accomplished, the sample suction pipe 601 is lifted above the cleaning tub 1401 corresponding to the initial setting position.

A description will now be made of the supply operation of the sheath fluid. A portion of compressor air in the compressor 201 has been fed to the pressure vessel 202. The pressure adjuster 203 employed in the pressure vessel 202 is so operated that air pressure within the pressure vessel 202 is continuously constant. The compressed air within this vessel 202 has been supplied to the sheath-fluid supplying tank 204. Since this tank 204 is a sealed vessel, the previous sheath fluid is pressured by the electromagnetic valve 208 for controlling the sheath-fluid supplying operation of the sheath-fluid supplying pipe 206 connected from the tank 204. Accordingly, when the electromagnetic valve 208 is opened, the sheath fluid is supplied to the flow cell 1. Since a predetermined amount of sheath fluid is fed, an amount of fluid stored within the tank 204 from which the fluid is reduced at one measurement is known. As shown in Fig. 5, the sheath fluid corresponding to an amount of fluid which is consumed from the sheath fluid vessel 207 has been previously sucked by driving the sheath-fluid supplying piston drive motor 2052. Upon completion of the measurement, the connection is established between the sheath fluid tank 204 and the sheath fluid supply syringe 205 by the sheath-fluid addition controlling electromagnetic valve 209 thereby to supply a predetermined amount of sheath fluid to the tank 204.

Subsequently, the suction operation of the flow-cell cleaning fluid will now be explained. The pressure at the vacuum vessel 1202 is kept constant by the ON/OFF operations of the vacuum pressure sensor 1203 and the vacuum pump 1201.

As a consequence, the flow-cell cleaning fluid suction tank 1204 connected to this vacuum vessel 1202 is maintained at negative pressure, the sheath fluid overflown from the sample sucking port 103 is sucked into this tank 1204 under such conditions that the electromagnetic valve 1207 for controlling the flow cell cleaning fluid is opened and the electromagnetic valve 1209 for controlling the flow-cell cleaning fluid exhaust operation. Upon completion of the suction, the suction control electromagnetic valve 1207 is brought into the close state and the exhaust control electromagnetic valve 1209 is brought into the open state, and then the cleaning fluid (sheath fluid) remaining in the flow-cell cleaning fluid suction tank 1204 is discharged into the waste fluid vessel 1205.

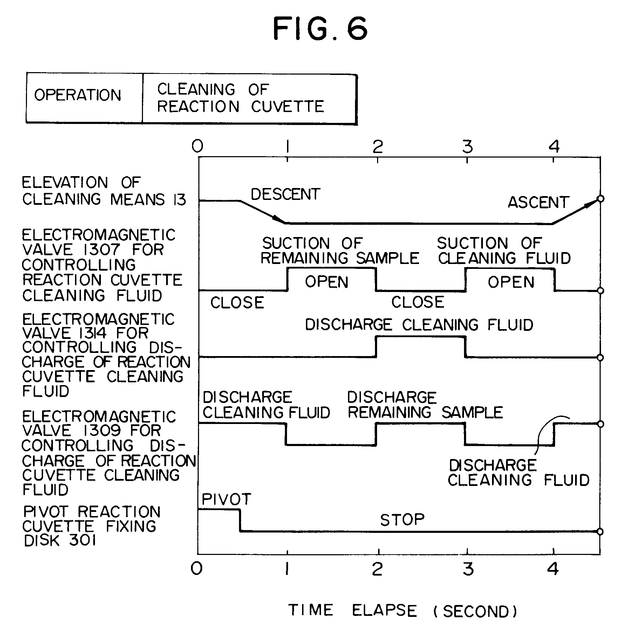

Then, referring to Fig. 6, the cleaning operation of the cuvette 3 shown in Fig. 3 will now be described. First, the reaction cuvette fixing disk 301 is rotated, so that the reaction cuvette 3 is moved just under the cleaning-fluid exhaust pipe 1301 and the remaining sample suction pipe 1302. Subsequently, the cleaning pipe elevator motor 1304 is driven in such a manner that the above-described pipes descends into the reaction cuvette 3. When the pipes are dipped within the remaining sample, the electromagnetic valve 1307 for controlling the reaction cuvette cleaning-fluid suction is brought into the open state, and the remaining sample is sucked. Both the sucking operation of the remaining samples and the waste fluid operation thereof are similar to the sucking operation of the flow-cell cleaning fluid, which is controlled by this electromagnetic valve and other electromagnetic valve 1309 for controlling the reaction cuvette cleaning fluid exhaust operation. When the suction of the remaining samples is ended, the electromagnetic valve 1314 for controlling the reaction cuvette cleaning-fluid suction is brought into the open state so that the cleaning fluid is exhausted from the cleaning fluid discharge pipe 1302. This discharge operation is the completely same as that for the cleaning fluid in each of the pipetter cleaning fluid. When the reaction cuvette 3 is filled with a certain amount of cleaning fluid, the electromagnetic valve 1307 is subsequently opened so as to again suck the cleaning fluid from the remaining sample suction sample 1302. The above-described cleaning fluid suction operation and cleaning-fluid discharge operation are repeated several times in order to clean the reaction cuvette 3. When the cleaning operation is accomplished, these cleaning means 13 is lifted and moved above the reaction cuvette 3 by operating the elevator motor 1304.

As previously described, the description has been made of the single reagent addition (white blood cell classification), while this operation is subdivided into 7 basic operations. Alternatively, other sequences may be constituted by combining these 7 operations.

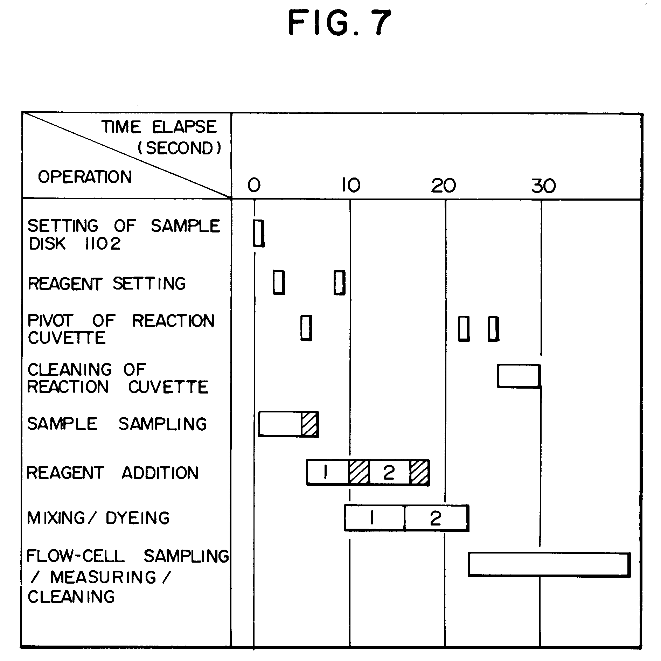

Referring now to Fig. 7, operations about such a case of 2-reagent addition will be explained. The operations are roughly subdivided into 10 steps. These steps are arranged by: a setting rotation operation for the sample cuvette 3 (first state); a sampling operation for samples (second stage); a rotation movement of the reaction cuvette (third step); an addition of a first reagent (fourth step); a mixture with the first reagent (fifth step); a setting rotation operation for a second reagent (sixth step); an addition of the second reagent (seventh step); a mixture with the second reagent (eighth step); sampling and measuring operations to the flow cell (ninth step); and a cleaning operation of the reaction cuvette 3 (tenth step). Although to the single reagent addition, both the second reagent addition and the setting rotation operation of the reagent by the reagent-fixing-disk rotation motor 1004 are newly added, the addition of the second reagent is similar to the sampling operation of the first reagent. Also the rotation operation of the reagent bottle 1001 is similar to the sample setting rotation operation.

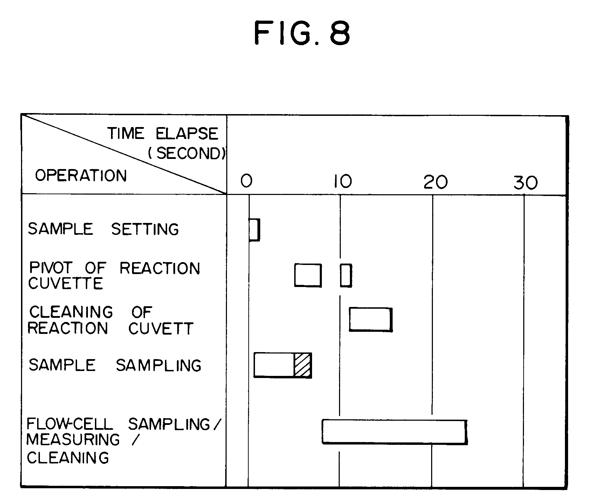

Next, referring now to Fig. 8, operations in case of direct conduction will be explained. This operation is constructed of five stages, and corresponds to the operation of the single reagent addition from which the operation of the reagent addition has been omitted. As a consequence, the basic operations of the respective stages are the same as those of the single reagent addition. Concretely speaking, the sample cuvette 1101 is first rotated so as to be set at the sampling position. Next, the samples are sampled in the reaction cuvette 3 by way of the sample pipetter 9. Subsequently, this reaction cuvette 3 is rotated and moved to the sampling position of the flow-cell pipetter 6. This sample is conducted into the flow cell and measured by the flow-cell pipetter 6. The left samples are cleaned.

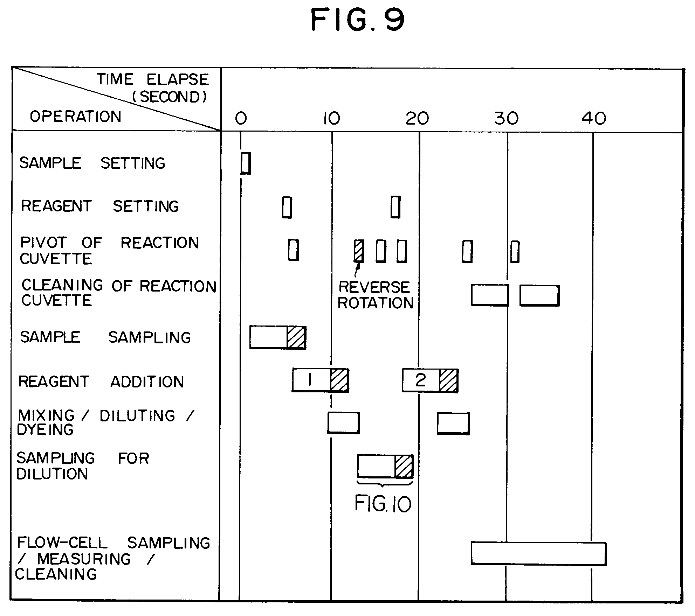

Referring to Fig. 9, the operations about such a case of the two-reagent addition with two-stage dilution will now be described. The entire operation is constituted by 10 basic operations. First the rotation cuvette is rotated to be set at the sampling position. Then, samples are sampled at the reaction cuvette 3 (the first reaction cuvette 3). After the reagent setting operation is performed and the first reaction cuvette 3 is rotatably moved to the sampling position of the reagent, the reagent pipetter 8 adds the first reagent to the sample. After the mixing operation is executed for a predetermined time period, the first reaction cuvette 3 into which this first sample (first adjust sample) has been entered, is again rotated to the sample exhaust position of the sample pipetter 9 in a reverse direction. The sample pipetter 9 performs the sampling operation for the two stage mixture and exhausts a portion of the first adjust sample to the reaction cuvette 3 prior to the above-described reaction cuvette 3 (namely the second reaction cuvette 3). Next, the second reaction cuvette 3 is rotated to the position of the reagent sampling operation. The second reagent has been moved to the sampling position of the sample pipetter 8 by the reagent-fixing-disk rotating motor 1004. The reagent pipetter 8 samples the second reagent and adds this second reagent to the first adjust sample stored in the second reaction cuvette 3. Thereafter, the mixture is executed in the second reaction cuvette 3 and after this mixing operation is accomplished, it is rotated to the sampling position of the flow-cell pipetter 6. The flow-cell pipetter 6 conducts this second adjust sample to the flow cell 1. Thereafter, both the first reaction cuvette 3 and second reaction cuvette 3 are successively cleaned in conformity with the rotation operation.

There is a particular advantage that such an operation of the two-reagent addition/2-stage dilution is suitable for, e.g., counting red blood cells. There are approximately 5,000,000 pieces of red blood cells per 1 microliter. Normally, to count these values, the red blood cells are diluted by magnification of 1,000 to 10,000 and the diluted red blood cells are supplied into a flow cell or the like where 20,000 to 50,000 pieces of diluted red blood cells are counted. Assuming now that 5 $\mu\ell$ of blood is collected, 25 ml of dilution fluid is required so as to dilute the collected blood at magnification of 5,000, so that a large quality of dilution fluid and a large capacity of reaction cuvette are required. Therefore, if the above-described 2-reagent/2-stage dilution method is employed, then the adjusted sample with dilution of 5,000 magnifications is obtained which is equal to such a case that the dilution fluid of 500 $\mu\ell$ is added as the first reagent, a portion of this dilution fluid of 5 $\mu\ell$ is picked up so as to be added as the second reagent and then mixed with each other. In this case, a total amount of dilution fluid is 750 $\mu\ell$ that is lower than the total amount of the dilution fluid in case of the 1-stage dilution by approximately 1/30.

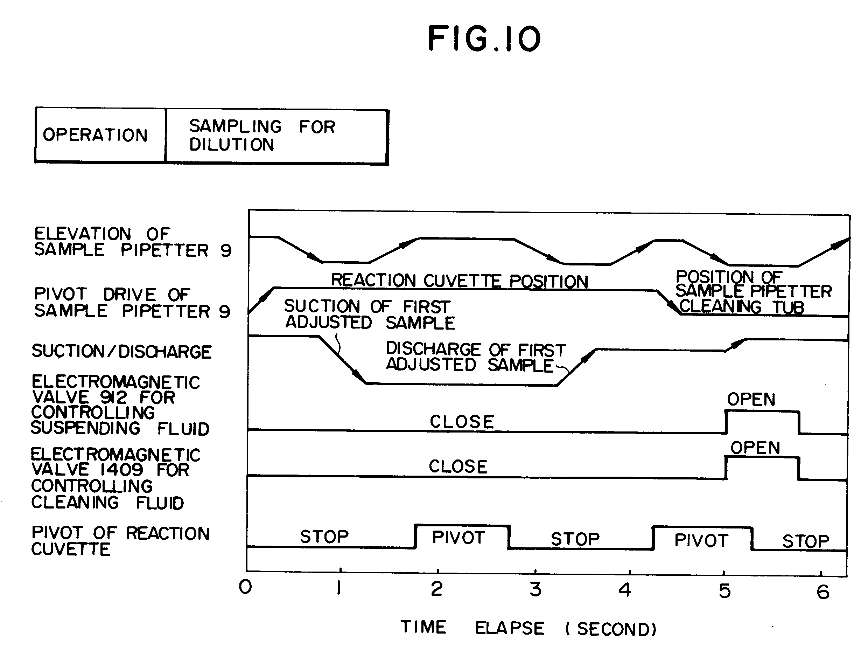

Referring now to Fig. 10, the basic sampling operation, as shown in Fig. 9, in case of the 2-stage dilution with employment of the sample pipetter 9 will now be explained. When the first reaction cuvette 3 is rotated in the reverse direction, the sample pipetter 9 positioned above the sample pipetter cleaning tub 1403 is pivoted over this cuvette to such a predetermined amount of first adjusted sample. Thereafter, the sample pipetter 9 is temporarily stopped above the reaction cuvette 3, during which it is again rotated along the normal direction and then the second reaction cuvette 3 is rotated just under the sample pipetter 9. A predetermined amount of the first adjusted sample which has been previously sucked, is discharged into this second reaction cuvette 3. Thereafter, the sample pipetter 9 is cleaned.

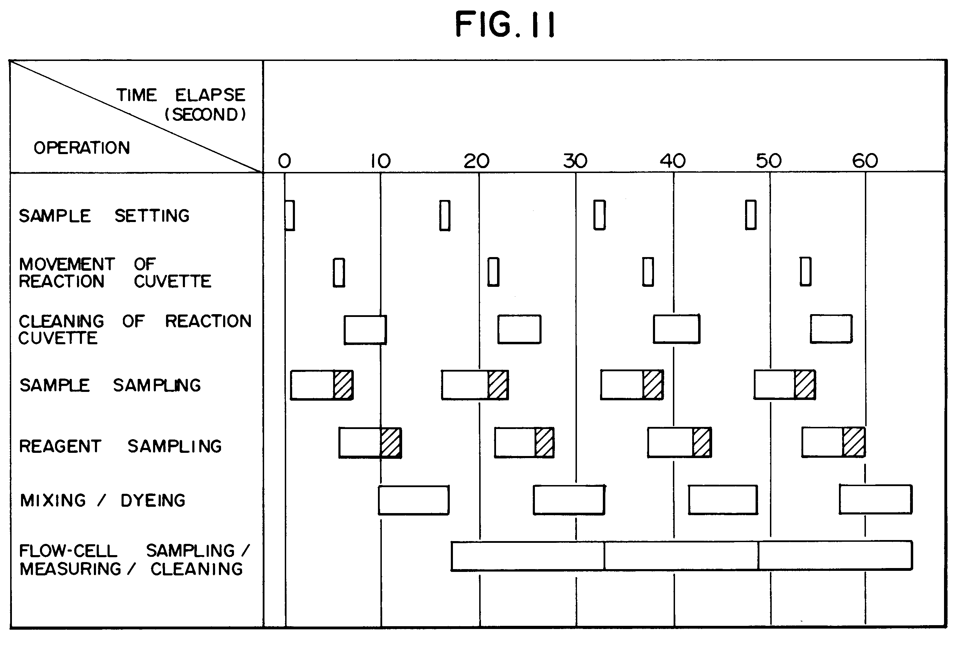

Next, referring now to Fig. 11, the continuous process for the single reagent addition will be described. As apparent from this drawing, this continuous process may be achieved by continuously performing the operation of the single reagent addition shown in Fig. 3. A time period required for performing the measurement sampling operation by way of the flow-cell pipetter 6 is 16 seconds. If the sample sampling operation for the subsequent sample and the reagent sampling operation thereto and furthermore the mixing operation can be performed within 16 seconds, the measurements can be successively performed every 16 seconds. In this case, the process speed becomes 225 samples per 1 hour.

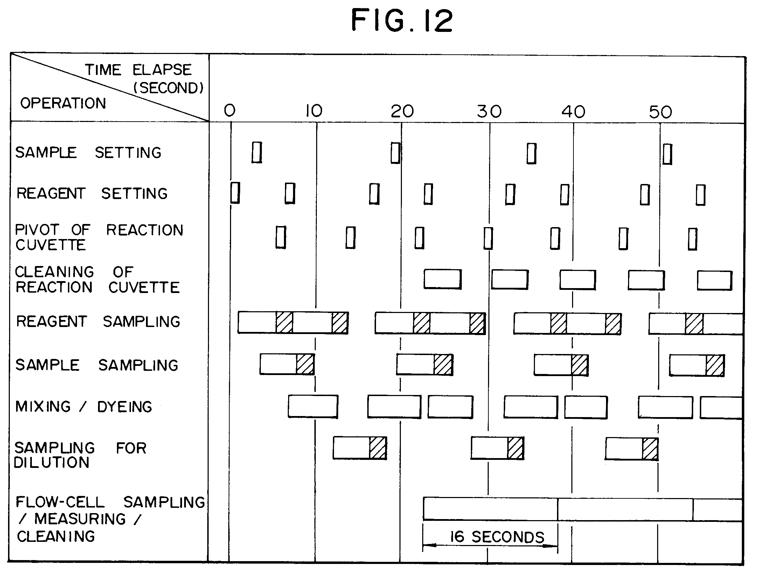

A continuous process operation on the two-reagent addition/two-stage dilution will now be explained with reference to Fig. 12. To increase the number of samples to be processed, the reaction cuvette 2 is not rotated in the reverse direction. However, since it is required to execute the sampling operation for the two-stage mixture, both a role exchange between the sample pipetter 9 and the reagent pipetter 6 and a position exchange between a set of sample storage means and a set of reagent storage means are performed respectively. Thus, this operation is executed as follows. First of all, the first reagent is entered into the first reaction cuvette 3. After the sample has been set during this time period, the reaction cuvette is rotated and the sample is entered by the sample pipetter 9 and mixed with the first reagent, during which the reagent is set and a predetermined amount of second reagent is sucked by the reagent pipetter 9. Upon completion of the mixture, a predetermined amount of this first adjusted sample is again sucked as the diluting sample by the same sample pipetter 9 and then brought into a waiting state in an upper position. When the second reaction cuvette into which the second reagent has been entered, is pivoted, this second adjusted sample is exhausted there, whereby the two-stage dilution may be achieved. If as previously described, a single operation is defined, as shown in Fig. 12, the process for superimposing with the next sample is possible. In this example, 5.5 seconds are consumed for the first reagent as time required for the dilution mixture and 6.5 seconds are consumed for the second reagent for the same purpose. In case of counting red blood cells, for instance, the dilution mixture operation can be sufficiently executed within such a time period. Accordingly, the counting operation is repeated every 16 seconds and thus a quantity of samples to be processed becomes 225 samples per 1 hour in this case.

While the operations have been explained as to the respective measurement items, both the amounts of samples and reagents and also the time periods of mixing/dyeing operations may be readily changed. It is obvious that even when these items are varied, there is no interference among these elements. In accordance with the present embodiment, the blood analyzing apparatus capable of accepting various measuring items and various measuring conditions by way of a simple operation input without changing the constructive elements of this analyzing apparatus.

Embodiment 2: DIRECT MIXING METHOD

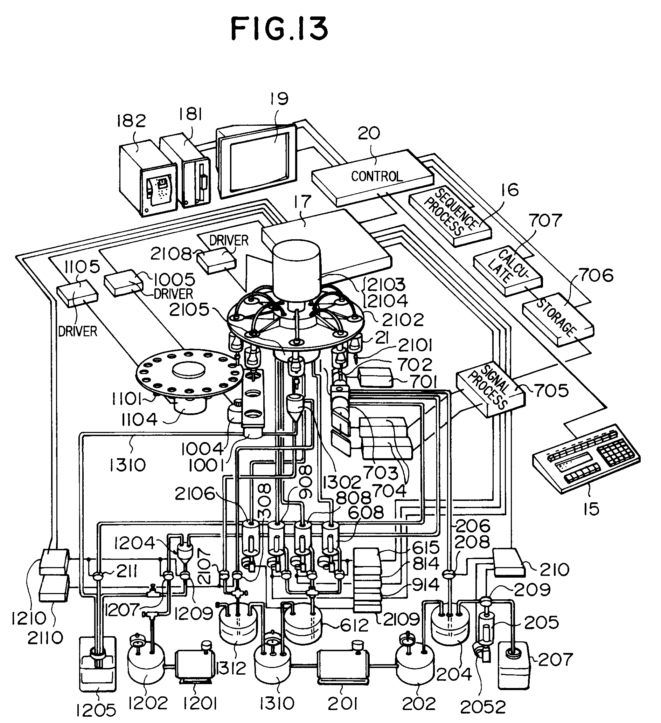

Then, a description will now be made of an embodiment for the direct mixing method. Fig. 13 is a schematic block diagram for representing an arrangement of a blood analyzing apparatus according to the present embodiment.

From the arrangement of the above-described discrete type apparatus a sample storage means; a flow-cell pipetter; a sample pipetter; a reagent pipetter; a sample-storage-means cleaning means are omitted, and a direct mixing pipetter 21 is employed instead of the above-described sample storage means and three pipetters in the blood analyzing apparatus according to the present embodiment. Other means of this blood analyzing apparatus are similar to those of the discrete type apparatus. It should be noted that this direct mixing pipetter is described in U.S. Patent Application Serial No. 550, 543 filed on July 11, 1990.

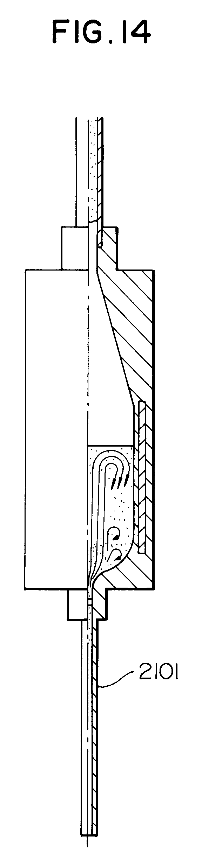

First, a construction of the direct mixing pipetter 21 will now be explained. The direct mixing pipetter is constructed of a sample suction pipe 2101 with a mixing chamber. This mixing chamber has such a shape, as shown in Fig. 14, that a variation in a sectional view thereof is expanded in a taper form from an upper portion to a center; a portion from the center to a bottom has a cylindrical shape; and a portion to connect the bottom with a pipe has a curve plane in order to achieve smooth connections. This mixing chamber is provided at an intermediate position of the sample suction pipe of the flow-cell pipetter. The direct mixing pipetter further comprises: a sample-suction-pipe fixing disk 2102 for supporting downwardly 8 sample suction pipes 2101 with mixing chambers in an equidistance relationship on a circumference portion along a vertical line; a rotating elevator mechanism 2103 for supporting a center of the sample-suction-pipe fixing disk 2102 and for repeating such an operation that when it turns by 45°, the rotating elevator mechanism descends, when a predetermined time has passed, this elevator mechanism again ascends and turns by 45°; a rotation driving motor 2104 mounted in the rotating elevator mechanism 2103 and rotated in response to a drive signal from a driver; and a flow-path changing valve 2105 constructed of a stator and a rotor on which holes for passing a suspending hydraulic fluid therethrough are formed on the same circumference by 45°. One of these stator and rotor is fixed on the sample-suction-pipe fixing disk 2102, whereas the other is fixed on the body so that it cannot be moved. In accordance with the disk rotation, the flow paths are successively changed every 45° in making contact with them by the flow-path changing valve 2105.

A sample sucking/dischanging means of the sample pipetter according to the embodiment 2 is connected to one hole of the stator of the flow-path changing valve 2105. Furthermore, the reagent sucking/discharging means of the reagent pipetter shown in the embodiment 1 is similarly connected to the hole adjacent the hole connected to the above-described sample sucking means among the holes of the stator for the flow-path changing valve 2105 along the circumference.

To mix the sample and reagent sucked into the mixing chamber, a mixing drive means is connected to the hole adjacent the above-described holes of the flow-path changing valve, by which a portion of these fluids is supplied or returned to/from the sample suction pipe positioned lower than the chamber.

A chamber-cleaning-fluid controlling electromagnetic valve 2107 is employed in the chamber cleaning pipe which is connected from the cleaning fluid tank 1312 via the flow-path changing valve to the pipetter.

The driving operations of the pipetter is controlled by a mixing pipetter driver 2108. The mixing drive means is under control of a mixing driver 2109. Cleaning operations of the pipetter and chamber are under control of a chamber cleaning driver 2110.

In accordance with the direct mixing system of this preferred embodiment, although the generalization of this mixing system is lower than that of the discrete system according to the preferred embodiment 1, a total number of samples to be processed thereof is better then that of the discrete method. Operations as to a single reagent addition will now be described.

Since all of the sample suction pipes have been fixed on a single fixing disk, the same operations are performed with having time differences. Accordingly, an attention is given to one sample suction pipe and an operation thereof will now be explained.

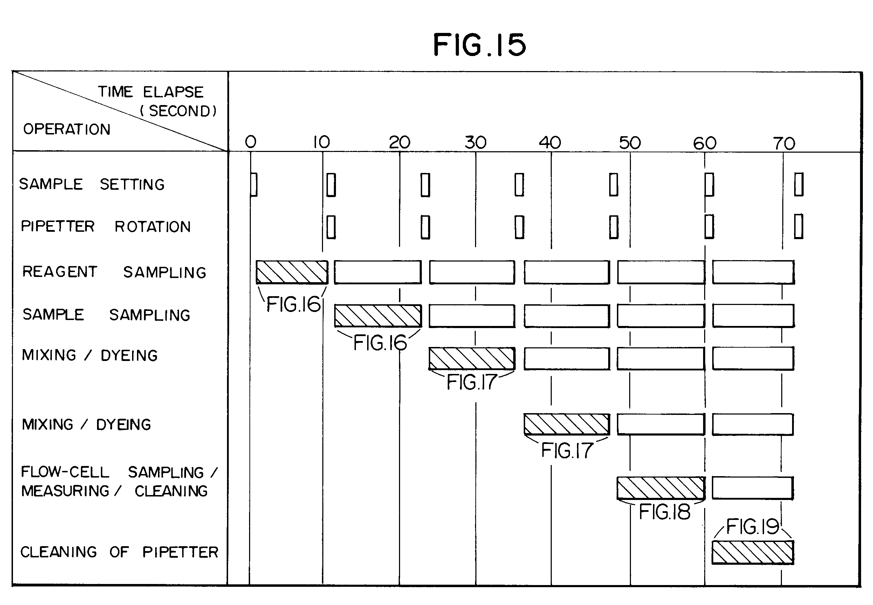

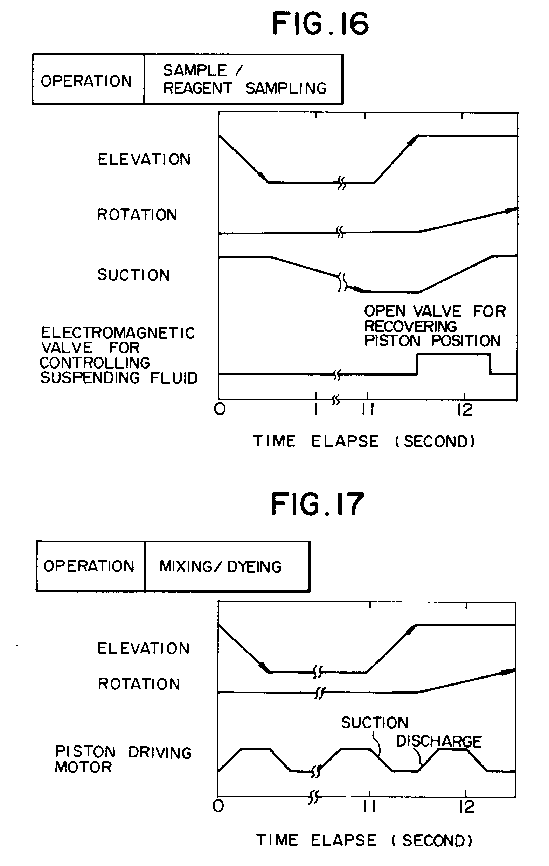

Fig. 15 is a timing chart for this operation of the sample suction pipe. This operation is mainly subdivided into 7 stages. Figs. 16 to 19 are timing charts of the basic operations in the respective stages.

Referring now to Fig. 15, operations of one direct mixing pipetter 21 (hatched portions) will be explained. First, a reagent sampling operation is performed. The reagent sampling operation is carried out in accordance with the flowing steps as shown in Fig. 16. The sample-suction-pipe fixing disk 2102 descends so that a tip portion of the suction pipe is dogged into the reagent bottle. Under this condition, the suction pipe is connected via the flow-path changing valve to the reagent sucking means and thus a predetermined amount of reagent is sucked by this suction operation. In this case, the suction amount may be easily changed by varying a transmission signal to the drive motor of the sucking means. Again the disk 2102 is lifted up and then the reagent sampling operation is accomplished. Thereafter, the disk is rotated by 45° along a clockwise direction. At this time, the rotor of this flow-path changing valve 2105 is simultaneously rotated so that the flow path of this suction pipe is connected to the flow path of the sample suction means. Subsequently, the sample sampling operation is carried out. The steps of this sampling operation are completely similar to those of the reagent sampling operation as shown in Fig. 16.

Thereafter, mixing dye operations as shown in Fig. 17 are repeated twice every time the disk is rotated by 45°, during which it is connected to a mixing drive means by way of the flow-path changing valve, whereby the samples are completely mixed with the reagent. Referring now to Fig. 17, a mixing step for the sample and reagent by the mixing drive means and the sample suction pipe with the mixing chamber will be explained. The reagent is first sucked and thereafter the sample is sucked. However, only under such a condition, these two fluids are not completely mixed with each other. Then, a part of sample which has not yet been completely mixed with the reagent and is located at a lower portion of the chamber, is exhausted into the pipe connected to this lower portion. Thereafter, this fluid is quickly returned to the chamber again. At this time, eddies caused by such rapid expanding flows happen to occur over the chamber, and the eddies may cause both the sample and reagent to be mixed with each other. When such an operation is repeated several times, substantially complete mixture can be achieved.

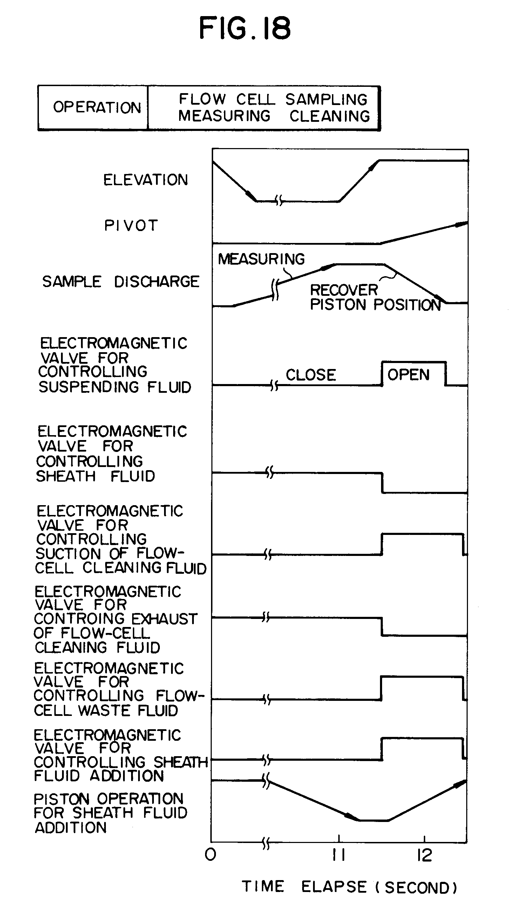

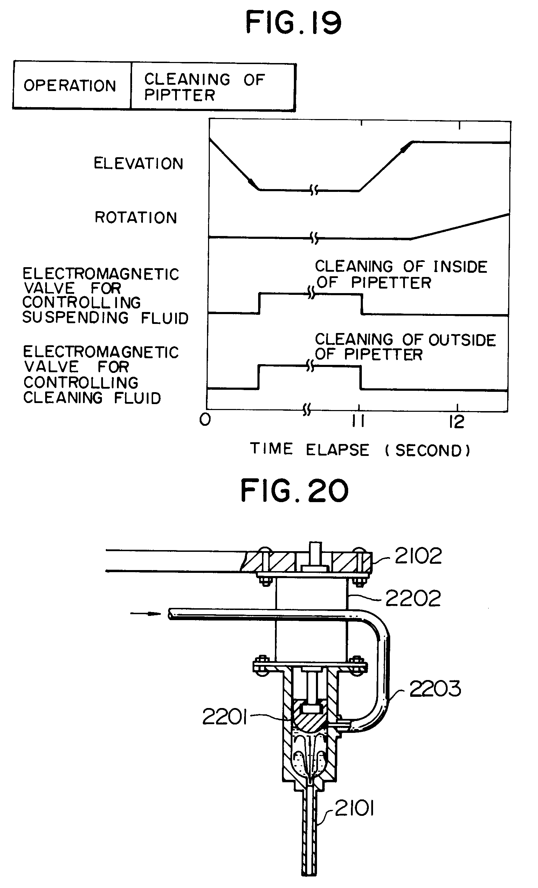

Then, as shown in Fig. 18, when the disk is rotated by 45°, the measurement is performed at the flow cell. In this case, the disk descends and it is so adjusted that a sealing chip provided at a tip portion of the sample supplying port is made in contact with a sealing chip employed at a tip portion of the sample suction pipe. The exhaust operation for the measurement is carried out by the sample exhausting means. Upon completion of the measurement, the disk is again rotated at 45° and descends in the next pipetter cleaning tub as shown in Fig. 19. Here, an outside of the suction pipe is cleaned and also both the sample suction pipe and mixing chamber are cleaned by the chamber cleaning means. The above-described operation is such an operation that is carried out while one sample suction pipe is rotated once. The time periods required for the respective operations are necessarily equal to each other, and this time period is selected to be 1215 seconds in this preferred embodiment. Accordingly, it is possible to measure a sample every 12.5 seconds. In other words, a total number of samples to be processed becomes 288 samples per 1 hour.

In accordance with the arrangement of this preferred embodiment 2, variations in the amounts of samples and reagents can be easily achieved, which is similar to the preferred embodiment 1, and furthermore a total number of samples to be processed can be considerably increased.

As the mixing drive means of the second preferred embodiment 2, any other means capable of repeatedly sucking/discharging samples and reagents in a constant time period may be alternatively employed. For example, vibrations given to the suspending hydraulic fluid may be achieved by way of a piezoelectric element, and also by way of pipe-compression/release operation such as a diaphragm pump and cam.

In the embodiment 2, the suction, mixture suction/exhaust and the like for the samples and reagents are transferred via the flow-path changing valve to the respective pipetters. Alternatively, as shown in Fig. 20, both a compact syringe pump 2201 and also a compact linear actuator 2202 are directly mounted on the upper portion of the chamber for each pipetter so that the operations which were sequentially performed by other syringes may be separately carried out by the respective syringe pumps. The cleaning operations of the chambers may be performed by actuating this syringe pump to suck the cleaning fluid from the pipetter cleaning tub. Otherwise, a pipe 2203 for supplying the cleaning fluid to the chamber may be connected thereto.

With employment such arrangement, fine adjustments for the suction amounts of the respective samples and the mixing operations may be realized, whereby the blood analyzing apparatus according to this preferred embodiment may be realized with the improved generalization.

Embodiment 3: HYBRID APPARATUS

From the previously described particle measuring apparatuses according to the preferred embodiments 1 and 2, it is effective to obtain a particle measuring apparatus constructed with the following combination.

That is, it is such an apparatus comprising a plurality of particle measuring apparatuses as defined in the preferred embodiment 1, which are controlled under an entire sequence controller. For example, in case that the apparatus is constructed of two particle counting apparatuses, as to a single sample, both classification and counting operation for white blood cells are performed by the first particle measuring apparatus and both measuring operations for red blood cells and reticrocyte are carried out by the second particle measuring apparatus. As a result, a large quantity of items can be measured within a limited time period.

Also, it is such an apparatus equipped with the first particle counting apparatus and the second particle counting apparatus, which are controlled by an entire sequence controller. In the particle measuring apparatus of the preferred embodiment 1, either reticrocyte or red blood cells are counted, whereas the particle measuring apparatus of the preferred embodiment 2 is employed to classify white blood cells. In general, a length time period is required in dyeing operation for the white blood cell classification. Accordingly, if this dyeing operation is carried out by the same apparatus for counting the red blood cells, time differences are gradually produced in order to obtain the respective measurement results with respect to the same sample while the measurements are repeated. Therefore, the measuring apparatus of the embodiment 2, having the higher sample processing capability is employed to measure the white blood cells. Thus, a multiple measurement may be achieved without lowering the total number of sample to be processed.

It should be noted that although the above-described embodiments are intended to the blood analyzing apparatuses, the present invention is not limited thereto. For example, not only biological particles such as blood, but also very small objects which may stray in a solution or a gas may be measured by the particle measuring apparatus according to the present invention.

In accordance with the present invention, for instance, various measuring items in blood cell measurements (cell count, white blood cell classification, reticrocyte and lymph subset) can be readily measured by a single particle measuring apparatus. Even when there are changes in characteristics of a reagent, dyeing conditions (amount of addition, time and so on) may be simply changed, so that the particle measuring apparatus with very higher generalization and effective workabilities may be obtained.

**Claims**

1. A particle measuring apparatus comprising:

   sample storage means (3, 1101) for storing therein a sample to be measured;

   a flow cell (1) including a first input port (101) for supplying a sheath fluid, a first flow path communicated with said first input port and constracted into a thin stream in a down stream direction, a second input port (103) for supplying a sample fluid, and a second flow path communicated with said second input port, and having an exhaust port for said sample fluid within said first flow path;

   sheath fluid supplying means (204 - 210) connected to said first input port of the flow cell, for supplying a predetermined amount of sheath fluid for a predetermined time period;

   sample storage means (6, 9, 21) for sucking a constant amount of sample stored in said sample storage means and for exhausting a predetermined amount of sample to be measured to said second input port of the flow cell;

   sensing means (7, 701 - 704) for detecting information about particles of said sample fluid which flow through said first flow path of the flow cell;

   signal processing means (705 - 707) for calculating a signal sensed by said sensing means;

   input means (15) for inputting both a measurement condition and in initiating instruction of said particle measuring apparatus;

   storage means (16) for storing a series of operation contents for a mechanical unit of said particle measuring apparatus;

   drive instruction means (17, 20, 210, 614, 2108) for driving both said sheath fluid supplying means and said sample storage means based upon said series of operation contents stored in said storage means and the input instruction derived from said input means; and

   output means (19, 20, 181, 18) for outputting both the measurement value calculated by said signal processing means and the measurement condition inputted from said input means.

2. A particle measuring apparatus as claimed in Claim 1, wherein said sample storage means comprises:

   a supporting member (301, 2102) for supporting a series of plural sample vessels (3, 21) for each storing the sample;

   a supporting member driving means (501, 2104) for driving said supporting member so as to successively move said sample vessels to a sample supply position to said flow cell; and

   a sample supplying means (6, 2103) for supplying only a constant amount of samples from the sample vessels which have been moved to the sample supply position by said supporting member drive means, to said second input port of the flow cell.

3. A particle measuring apparatus as claimed in Claim 2, wherein said sample supplying means is a sample pipetter means (6) for sucking a constant amount of samples and for exhausting a predetermined amount of samples to said second input port of the flow cell.

4. A particle measuring apparatus as claimed in Claim 3, wherein said sample pipetter means is arranged by:

   a sample suction pipe (601) one end of which is opened and which transports a sample sucked inside;

   pipetter driving means (603 - 606) for moving said sample suction pipe between the sample fluid in the sample vessel positioned at the sample supply position and the second input port of the flow cell;

   a suction/discharge pump (608) for sucking/discharging a sample fluid;

   a tube (609) which extends from an outlet of said suction/discharge pump, and is connected to the other end of said sample suction pipe;

   a pipetter driver (614) for performing in predetermined operation of said pipetter driving means in response to a signal from said drive instruction means; and

   a sample suction/discharge driver (615) for performing a predetermined operation of said sample suction pump in response to a signal derived from said drive instruction means.

5. A particle measuring apparatus as claimed in Claim 4, wherein said storage means is a means for storing at least one of the following series of operations:

   a) the sample suction/discharge pump (608) is driven to fill with a dispensing hydraulic fluid up to an opening end of the sample suction pipe, or a place just before the opening end thereof;

   b) the pipetter drive means is driven to move the opening end of the sample suction pipe to a position of the sample vessel present at the sample supply position, whereby said opening end is dipped into the sample;

c) the sample suction/discharge pump is driven to suck a predetermined amount of sample fluid;

d) the pipetter drive means is driven to move the opening end of the sample suction pipe toward a position of the second input port of the flow cell and to connect the opening end therewith;

e) the sheath fluid supply means is driven to supply the sheath fluid to the flow cell; and

f) the sample suction/exhaust pump is driven to exhaust the sucked sample at a predetermined flow rate.

6. A particle measuring apparatus as claimed in Claim 1, wherein said sensing means is a means (701, 704) for projecting light to particles which flow through the first flow path of the flow cell and for sensing scattering rays and fluorescent light from each of the particles.

7. A particle measuring apparatus as claimed in Claim 1, wherein said sensing means is a means for sensing an electric resistance when the particles pass through a very small hole formed at the down stream of the first flow path of the flow cell.

8. A particle measuring apparatus as claimed in Claim 1, wherein said sample storage means includes:

a sample supporting member (301, 2102) for supporting a series of plural sample vessels (3, 21) each for storing the sample;

reagent storage means (1001) for storing at least one sort of reagent;

sample-supporting-member drive means (501, 2104) for driving said sample supporting member so as to successively move said sample vessel from said reagent storage means to a reagent addition position; and

reagent supplying means (8, 2103) for adding said reagent to the sample vessel which has been moved to the reagent supply position by said sample-supporting-member drive means.

9. A particle measuring apparatus as claimed in Claim 8, said reagent storage means includes:

a reagent supporting member (1002) for supporting a series of plural reagent vessels (1001) each for storing the reagent; and

reagent-supporting-member driving means (1004) for driving said reagent supporting member so as to move a predetermined vessel within said plurality of reagent vessels to a position where the reagent is sucked by said reagent supplying means.

10. A particle measuring apparatus as claimed in Claim 9, said sample storage means includes:

a sample supporting member (1102) for supporting a series of plural sample vessels (1101) each for storing the sample; and

sample-supporting-member driving means (1103, 1104) for driving said sample supporting member so as to sequentially move said sample vessels to the sample sucking position.

11. A particle measuring apparatus as claimed in Claim 10, wherein said sample storage means further includes:

sample-supporting-member driving means (1004) for driving said sample supporting member so as to move a predetermined sample vessel among said plurality of sample vessels to said sample adding position; and

sample pipetter means (9) for sucking a constant amount of sample stored in the sample vessel at said sample sucking position and for exhausting a predetermined amount of sample into the sample vessel at said sample adding position.

12. A particle measuring apparatus as claimed in Claim 11, wherein said sample storage means further includes sample pipetter means for supplying the sample in the sample vessel at a predetermined position to said second input port of said flow cell.

13. A particle measuring apparatus as claimed in Claim 12, wherein said sample pipetter means includes:

a sample suction pipe (901) for sucking/exhausting the sample;

sample sucking/exhausting means (908) for performing a sucking/exhausting drive of said sample suction pipe; and

sample pipetter drive means (903 - 906) for moving said sample suction pipe between the sample vessel at said sample sucking position and the sample vessel at the sample exhausting position; and also, said reagent supplying means includes:

a reagent suction pipe (801) for sucking/exhausting the reagent;

reagent sucking/exhausting means (808) for performing the suction/exhaust drive of the reagent suction pipe; and

reagent pipetter drive means (803 - 806) for moving said reagent suction pipe the reagent vessel at said reagent sucking position and the sample vessel at the reagent adding position, and furthermore, said sample pipetter